# EUROPÄISCHE PATENTSCHRIFT

(11) **EP 2 996 832 B1**
(45) Veröffentlichungstag und Bekanntmachung des Hinweises auf die Patenterteilung: **19.07.2017**
(21) Anmeldenummer: 13729283.5
(22) Anmeldetag: 04.06.2013
(51) Int. Cl.: B23D 63/14, B23D 45/02

(54) **SÄGEMASCHINE**
SAWING MACHINE
SCIEUSE

(30) Priorität: 15.05.2013 DE 202013102124 U
(43) Veröffentlichungstag der Anmeldung: 23.03.2016
(73) Patentinhaber: D.I.S. Industriesägen GmbH & Co. KG, 42929 Wermelskirchen (DE)
(72) Erfinder: KAMPMANN, Ingo, 44141 Dortmund (DE)
(74) Vertreter: Nunnenkamp, Jörg
(86) Internationale Anmeldenummer: PCT/EP2013/061507
(87) Internationale Veröffentlichungsnummer: WO 2014/183806

(56) Entgegenhaltungen:
- DE-U1- 29 722 674

## Beschreibung

Die Erfindung betrifft eine Sägemaschine zum Schneiden oder Trennen von Werkstücken, insbesondere eine Schlittensäge zum Sägen von Walzprodukten wie Profilstäben oder Rundstäben im Auslaufrollengang bzw. ausgangsseitig einer Walzstraße, mit zumindest einem rotierenden Sägeblatt mit Sägezähnen, ferner mit einer Transporteinrichtung, beispielsweise einem Rollengang, für die Zuführung der Werkstücke zur Sägemaschine, weiter mit einem Antrieb für einen Sägeschlitten zum Vorfahren der Sägemaschine unter Schneiden oder Trennen des Werkstückes in vorwählbarer Schnittebene um ein vorgegebenes Vorschubmaß und zum Zurückfahren der Sägemaschine nach erfolgtem Schneid- oder Trennvorgang, und mit einer an das Sägeblatt wenigstens stirnseitig anstellbaren Sägeblattschleifvorrichtung zum zumindest umfangsseitigen Bearbeiten der Sägezähne. - Die erfindungsgemäße Sägemaschine und insbesondere Schlittensäge kann selbstverständlich auch unabhängig von einer Walzstraße zum Einsatz kommen und hier beispielsweise dazu genutzt werden, Spundwände oder allgemein Stahlprofile zu sägen.

Eine Sägemaschine des eingangs beschriebenen Aufbaus und der zugehörigen Ausprägung wird in dem Gebrauchsmuster DE 297 22 674 U1 vorgestellt. Darüber hinaus kommen Sägemaschinen ohne zusätzliche Sägeblattschleifvorrichtung in der Praxis zum Einsatz. Bei derartigen Sägemaschinen und insbesondere Schlittensägen rotiert das Sägeblatt üblicherweise in einer geschlossenen Schutzhaube und wird durch Wasser oder Druckluft gekühlt. Die Sägespäne und das Kühlwasser werden im Allgemeinen im einem Wasserkasten unterhalb des Sägeblattes abgeführt. Das Sägeblatt rotiert meistens mit Umfangsgeschwindigkeiten, die Werte von mehr als 100 m/s erreichen können. Tatsächlich werden Umfangsgeschwindigkeiten bis zu maximal 150 m/s beobachtet. Demgegenüber bewegt sich die Vorschubgeschwindigkeit für den Sägeschlitten beim eigentlichen Schneid- oder Trennvorgang im Bereich von 0,1 m/s bis ca. 1 m/s.

Auf diese Weise wird im Bereich der Schnittebene bzw. im Schnittbereich des Werkstückes ein sogenannter Schmelzschnitt beobachtet. Dieser lässt sich darauf zurückführen, dass das Werkstück bzw. Schneidgut durch die mittels des rotierenden Sägeblattes aufgebrachte Reibungswärme auf seine Schmelztemperatur gebracht wird und folgerichtig durchtrennt oder geschnitten wird. Infolge des Materialabtrags im Schnittbereich bzw. im Bereich der Schnittebene ist mit einem mehr oder minder großen Verschleiß des jeweils verwendeten Sägeblattes zu rechnen.

Tatsächlich wird ein erhöhter Verschleiß insbesondere an den in Drehrichtung des Sägeblattes vorderen Kanten der Sägezähne beobachtet. Hier kommt es unter anderem zu Abrundungen, Ausfransungen, Abbrüchen oder dergleichen. Als Folge hiervon beobachtet man eine unerwünschte Gratbildung im Bereich der Schnittebene am Schneidgut bzw. zu trennenden Werkstück. Das muss unbedingt vermieden werden, weil hieraus kostenintensive Nachbearbeitungsvorgänge resultieren.

Ungeachtet der beschriebenen Gratbildung beobachtet man in der Praxis bei den eingesetzten Sägeblättern oftmals einen Höhenschlag. Dieser Höhenschlag lässt sich beispielsweise darauf zurückführen, dass die auf einer Antriebswelle bzw. Hauptwelle eines Motors aufgenommenen Sägeblätter mit einer Aufnahmebohrung ausgerüstet sind, deren Durchmesser denjenigen der betreffenden Welle um ein bestimmtes (geringfügiges) Maß überschreitet. Dadurch lassen sich die Sägeblätter bei der Montage relativ leicht und schnell auf die fragliche Welle schieben und hierauf festlegen. Gleichwohl kann es in der Praxis und durch Wärmeeinwirkung zu Verzug und folglich dem angesprochenen Höhenschlag kommen. Dieser führt ebenfalls zu einem verschlechterten Schnittbild. Hinzu kommt, dass abgenutzte Sägezähne bei einem Sägeblatt eine etwaige Rissbildung des Sägeblattes begünstigen können. Ganz abgesehen davon sind stumpfe Sägeblätter mit einer erhöhten Lärmentwicklung verbunden, was ebenfalls als nachteilig angesehen wird.

In der Praxis wird beim Auftreten solcher Probleme regelmäßig das Sägeblatt getauscht. Ein solcher Sägeblatttausch führt zu Stillstandzeiten der zugehörigen Sägemaschine, was im Zusammenhang mit den typischerweise kontinuierlich laufenden Walzstraßen nicht akzeptiert werden kann. Denn das führt im Extremfall dazu, dass eine gesamte Walzstraße lahmgelegt wird bzw. in der Walzstraße ein Rückstau entstehen kann. Das ist unerwünscht und kostspielig. Hinzu kommt, dass der Austausch der Sägeblätter nicht unmittelbar und notwendigerweise ein verbessertes Schnittergebnis bringt. Denn ein etwaiger Höhenschlag kann auch bei einem neuen Sägeblatt bzw. einem überarbeiteten Sägeblatt auftreten.

Zwar wurde im Rahmen der einleitend bereits beschriebenen DE 297 22 674 U1 versucht, an dieser Stelle Abhilfe zu schaffen. Die in diesem Kontext vorgeschlagene Sägeblattschleifvorrichtung hat sich in der Praxis jedoch nicht bewährt. Denn hier sind Defekte an den Schleifelementen und/oder Materialausbrüche beobachtet worden. Ganz abgesehen davon führt der Einsatz von zusätzlichen Düsen und zugeführtem Schleifmittel bzw. Korundmaterial zu starken Verschmutzungen. Das gilt namentlich für sämtliche Lager der meistens eingesetzten Rollengänge. Jedenfalls wird die mit der entsprechenden Sägeblattschleifvorrichtung ausgerüstete Sägemaschine starker mechanischer Belastung und einem erhöhten Verschleiß ausgesetzt. Hier will die Erfindung insgesamt Abhilfe schaffen.

Der Erfindung liegt das technische Problem zugrunde, eine derartige Sägemaschine so weiterzuentwickeln, dass etwaige Stillstandzeiten auf ein Minimum reduziert sind und zugleich ein einwandfreier Schnitt des Werkstückes dauerhaft zu geringen Kosten zur Verfügung gestellt wird.

Zur Lösung dieser technischen Problemstellung ist eine gattungsgemäße Sägemaschine im Rahmen der Erfindung dadurch gekennzeichnet, dass die Sägeblattschleifvorrichtung wenigstens eine Bremseinheit aufweist.

Darüber hinaus ist die Auslegung meistens so getroffen, dass die Sägeblattschleifvorrichtung antriebslos in Bezug auf ein Schleifelement ausgebildet ist. Grundsätzlich kann die Sägeblattschleifvorrichtung aber auch mit einem eigenen Antrieb für das Schleifelement ausgerüstet werden. Im Regelfall ist ein solcher Antrieb jedoch nicht erforderlich, weil das fragliche Schleifelement von selbst an zu rotieren fängt. Tatsächlich wird das Schleifelement in an das rotierende Sägeblatt angelegtem Zustand meistens selbst in Rotation versetzt.

Hierbei geht die Erfindung von der Erkenntnis aus, dass das Schleifelement typischerweise als Rundschleifscheibe, Planschleifscheibe, Zylinderschleifstift oder Topfschleifscheibe ausgebildet ist. Das heißt, bei dem Schleifelement handelt es sich grundsätzlich um ein Rotationselement, welches zu diesem Zweck an eine Welle angeschlossen ist. Meistens ist die Auslegung in diesem Zusammenhang so getroffen, dass nicht nur das Schleifelement von der fraglichen Welle getragen wird, sondern zusätzlich die Bremseinheit an die das Schleifelement tragende Welle angeschlossen wird.

Da das Schleifelement folglich um die fragliche Welle als Drehachse rotieren kann bzw. mit der fraglichen Welle als Drehachse rotieren kann, wird das Schleifelement in an das rotierende Sägeblatt angelegtem Zustand selbst in die beschriebenen Rotationen versetzt.

Da das Schleifelement folglich um die fragliche Welle als Drehachse rotieren kann, wird das Schleifelement in an das rotierende Sägeblatt angelegtem Zustand selbst in die beschriebenen Rotationen versetzt. Denn bei diesem Vorgang treibt das rotierende Sägeblatt das Schleifelement im Allgemeinen außermittig an, so dass das Schleifelement antriebslos in Rotationen versetzt wird, nämlich mit Hilfe des rotierenden Sägeblattes.

Um das Schleifelement an das Sägeblatt anzulegen, ist regelmäßig eine Verstelleinheit vorgesehen. Mit Hilfe der Verstelleinheit kann das Schleifelement nicht nur an das Sägeblatt angelegt werden, sondern zusätzlich oder alternativ auch gegenüber dem Sägeblatt ausgerichtet werden. Zu diesem Zweck ist die Verstelleinheit mit einem entsprechenden Antrieb ausgerüstet. Demgegenüber ist das Schleifelement - wie beschrieben - selbst antriebslos ausgebildet.

Die Verstelleinheit verfügt meistens über zwei Stellschlitten. Dabei ist ein Stellschlitten als Radialvorschub ausgelegt und sorgt dafür, dass das Schleifelement in der Schnittebene bewegt wird. Die Schnittebene fällt typischerweise mit der vom Sägeblatt aufgespannten Sägeblattebene zusammen. Auf diese Weise sorgt der Stellschlitten für den Radialvorschub dafür, dass das Schleifelement radial an das Sägeblatt angelegt wird. Selbstverständlich liegt auch ein im Vergleich zur Radialrichtung winkliger Anstellvorgang an das Sägeblatt mit Hilfe des fraglichen Stellschlittens im Rahmen der Erfindung. In beiden Fällen bewegt sich das Schleifelement in oder entlang der Schnittebene bzw. der Sägeblattebene entweder radial in Richtung auf die Mitte des Sägeblattes zu oder in einem Winkel hierzu.

Der andere der beiden Stellschlitten als Bestandteile der Verstelleinheit sorgt demgegenüber typischerweise für eine Querbewegung im Vergleich zu der fraglichen Schnittebene bzw. Sägeblattebene. Diese Querbewegung des Schleifelementes kann senkrecht zur Schnittebene bzw. Sägeblattebene erfolgen oder auch in einem grundsätzlich beliebigen Winkel im Vergleich zu der Schnittebene bzw. Sägeblattebene.

Auf diese Weise kann der zu bearbeitende Sägezahn vielfältig hinsichtlich seiner Kontur eine Bearbeitung erfahren. Im Allgemeinen wird man bei dem erfindungsgemäß vorgesehenen Nachschleifvorgang so vorgehen, dass die jeweils mit Hilfe der Sägeblattschleifvorrichtung bearbeiteten Sägezähne mit einer mehr oder minder horizontalen Obenfläche bzw. Oberfläche ausgerüstet werden. Dadurch erhält der zugehörige Sägezahn einen größtenteils trapezförmigen Querschnitt. Hierzu gehört ein verschwindender bzw. sehr kleiner Freiwinkel.

Bei dem Freiwinkel handelt es sich um den Neigungswinkel der Obenfläche bzw. der Oberfläche des Sägezahnes gegenüber der Horizontalen in Drehrichtung des Sägeblattes. Selbstverständlich können je nach Anforderung mit Hilfe der Sägeblattschleifvorrichtung grundsätzlich auch beliebige Freiwinkel am jeweiligen Sägezahn definiert werden. Darüber hinaus besteht die Möglichkeit, dass Schleifelement schräg auf das Sägeblatt bzw. die zu bearbeitenden Sägezahne zu richten. Dadurch lässt sich der jeweilige Sägezahn anschrägen und mit einer Schräge im Vergleich zur Schnittebene bzw. Sägeblattebene ausrüsten.

Als besonderer Vorteil der in die Sägemaschine gleichsam integrierten Sägeblattschleifvorrichtung ist zu nennen, dass etwaiger Höhenschlag und auch Taumelbewegungen des Sägeblattes automatisch ausgeglichen werden oder ausgeglichen werden können. Denn die Sägeblätter werden typischerweise aus Grobblechen hergestellt und erfüllen keine gesteigerten Anforderungen an ihre Planheit und etwaige Toleranzen der Materialstärke. In diesem Zusammenhang sorgt das Schleifelement insgesamt für ein sogenanntes Überschleifen des Sägeblattes bzw. der zugehörigen Sägezähne, so dass am Ende der Bearbeitung ein über den gesamten Umfang gesehen gleichmäßiger Radius beobachtet wird. Das heißt, mit Hilfe der integrierten Sägeblattschleifvorrichtung können etwaige Fertigungsungenauigkeiten des Sägeblattes und/oder seiner Lagerung und/oder des Antriebes ausgeglichen und kompensiert werden.

Hinzu kommt, dass die erfindungsgemäße Sägeblattschleifvorrichtung typischerweise keinen Antrieb benötigt, sondern das Schleifelement als solches meistens antriebslos gestaltet ist. Sofern ein Antrieb erforderlich ist, kommt dieser meistens (nur) bei der Verstelleinheit zum Einsatz, mit deren Hilfe das Schleifelement an das Sägeblatt angelegt und/oder gegenüber dem Sägeblatt ausgerichtet wird.

Um bei dieser Auslegung dennoch sicherzustellen, dass die Umfangsgeschwindigkeit des Schleifelementes kritische Werte nicht überschreitet, lässt sich die Umfangsgeschwindigkeit des Schleifelementes mit Hilfe der Bremseinheit variierbar einstellen. Hierbei geht die Erfindung von der Erkenntnis aus, dass derartige Schleifelemente typischerweise Umfangsgeschwindigkeiten im Bereich zwischen 30 m/s bis 60 m/s vollführen. Höhere Umfangsgeschwindigkeiten können demgegenüber zur Zerstörung des Schleifelementes führen, müssen also vermieden werden. Das gelingt erfindungsgemäß besonders elegant und einfach mit Hilfe der Bremseinheit.

Zu diesem Zweck ist dem Schleifelement meistens ein Drehzahlsensor zugeordnet. Die von dem Drehzahlsensor aufgenommenen Werte können von einer Steuereinheit verarbeitet werden. Mit Hilfe der Steuereinheit wird im Allgemeinen die Bremseinheit beaufschlagt. Auf diese Weise sorgt die Steuereinheit in Verbindung mit der Bremseinheit dafür, dass das Schleifelement hinsichtlich seiner Umfangsgeschwindigkeit in dem angegebenen Wertebereich zwischen beispielsweise 30 m/s und 60 m/s gehalten wird, jedenfalls keine unzulässig hohe Umfangsgeschwindigkeit vollführt.

Zu diesem Zweck ist die Bremseinheit typischerweise - wie bereits beschrieben - an eine das Schleifelement tragende Welle angeschlossen. Dabei hat es sich bewährt, wenn die Bremseinheit und das Schleifelement im Wesentlichen an sich gegenüberliegenden Enden der Welle vorgesehen sind. Bei der Bremseinheit als solcher kann es sich um jedwede denkbare Bremse handeln, beispielsweise eine Reibbremse, insbesondere Scheibenbremse, eine Fluidbremse, eine Wirbelstrombremse oder auch Kombinationen hiervon.

Schließlich liegt es im Rahmen der Erfindung, dass die Bearbeitung der Sägezähne bzw. des Sägeblattes mit Hilfe der Sägeblattschleifvorrichtung während Walzpausen, gegebenenfalls mehrfach, durchgeführt wird. Auf diese Weise werden vom Walzprozess vorgegebene Pausen oder Unterbrechungen vorteilhaft dazu genutzt, das jeweils in der Sägemaschine vorhandene Sägeblatt nachzubearbeiten. Hierzu eignet sich die in die Sägemaschine erfindungsgemäß integrierte Sägeblattschleifvorrichtung besonders vorteilhaft. Der eigentliche Schleifvorgang kann so durchgeführt und vorgenommen werden, dass der jeweilige Sägezahn des Sägeblattes die gewünschte Kontur erhält oder eine solche wiederhergestellt wird. Meistens kommt es darauf an, die in Drehrichtung jeweils vorderen Kanten zu schärfen. Außerdem eignet sich die integrierte Sägeblattschleifvorrichtung vorteilhaft dazu, etwaige Fertigungsungenauigkeiten auszugleichen, wie beispielsweise einen Höhenschlag des eingebauten und rotierenden Sägeblattes.

Das alles gelingt unter Berücksichtigung geringer Kosten sowie bei Realisierung einer besonders robusten Bauweise. Hinzu kommt, dass typischerweise keine externe Energieversorgung erforderlich ist, weil die Verstelleinheit für das Schleifelement grundsätzlich auch manuell bedient werden kann. Schließlich lässt sich die Sägeblattschleifvorrichtung vorteilhaft an eine ohnehin vorhandene Schutzhaube anschließen, so dass der Einbau und die Montage zudem einfach und kostengünstig gelingen. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Sägemaschine in Seitenansicht,
- Fig. 2: einen Ausschnitt aus Fig. 1 im Bereich der Schutzhaube teilweise geöffnet mit hieran angebrachter Sägeblattschleifvorrichtung,
- Fig. 3: die Sägeblattschleifvorrichtung in einer schematischen Aufsicht aus Richtung X gemäß Fig. 2 und
- Fig. 4: eine perspektivische Ansicht eines bearbeiteten Sägeblattes.

In den Figuren ist eine Sägemaschine zum Schneiden oder Trennen von Werkstücken 1 dargestellt. Tatsächlich handelt es sich nicht einschränkend um eine Schlittensägemaschine zum Sägen von Walzprodukten. Bei den Walzprodukten handelt es sich um Profilstäbe 1 oder Rundstäbe ausgangsseitig einer Walzstraße. Tatsächlich werden die fraglichen Profilstäbe 1 oder Rundstäbe am Auslaufrollengang der betreffenden Walzstraße für den Schneidevorgang zur Verfügung gestellt. Die gezeigte Schlittensägemaschine ist als Kreissägemaschine ausgelegt und kann als Kaltsägemaschine fungieren. Nach dem Ausführungsbeispiel handelt es sich um eine Warmsägemaschine zum Warmsägen der Profilstäbe 1.

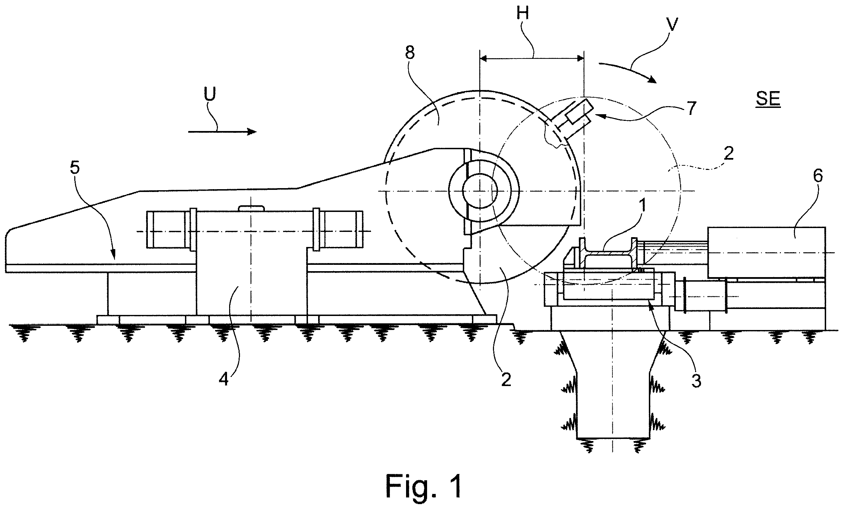

Die Sägemaschine ist in ihrem grundsätzlichen Aufbau mit einem rotierenden Sägeblatt 2 sowie einer Transporteinrichtung 3 ausgerüstet. Bei der Transporteinrichtung 3 handelt es sich um einen Rollengang 3, vorliegend beispielsweise den Auslaufrollengang der Walzstraße. Das Sägeblatt 2 ist mit umfangsseitigen Sägezähnen SZ ausgerüstet. Mit Hilfe des Rollenganges 3 bzw. der Transporteinrichtung 3 werden die Profilstäbe 1 im Ausführungsbeispiel der Sägemaschine in Förderrichtung, das heißt senkrecht zur Zeichenebene in der Fig. 1, zugeführt. Zusätzlich erkennt man dort einen Antrieb 4 für einen Sägeschlitten 5, mit dessen Hilfe die Sägemaschine unter Schneiden oder Trennen des Profilstabes 1 in vorwählbarer Schnittebene SE um ein vorgegebenes Vorschubmaß bzw. einen Hub H verfahren wird. Das geschieht mit der Vorschubgeschwindigkeit U.

Das heißt, durch Verfahren bzw. Vorfahren des Sägeschlittens 5 mittels des Antriebes 4 in die in Fig. 1 strichpunktiert dargestellte Stellung des Sägeblattes 2 wird der seitens der Transporteinrichtung 3 zugeführte Profilstab 1 zerteilt bzw. gesägt. Damit der Profilstab 1 während des Sägens nicht verrutscht oder sonst wie hin- und herbewegt wird, ist zusätzlich noch eine Haltevorrichtung 6 vorgesehen, welche den Profilstab 1 während des Schneidens bzw. Trennens festklemmt.

Nach Beendigung des Schneidvorganges wird der Sägeschlitten 5 mittels des Antriebes 4 wieder in die durchgezogen gezeigte Stellung zurückgefahren. Das Vorfahren bzw. Zurückfahren der Sägemaschine mit der Vorschubgeschwindigkeit U erfolgt im Allgemeinen in horizontaler Richtung. Grundsätzlich kann die Sägemaschine bzw. der Profilstab 1 auch in vertikaler Richtung verstellt werden, so dass eine gegenseitige Ausrichtung in dieser vertikalen Richtung möglich ist.

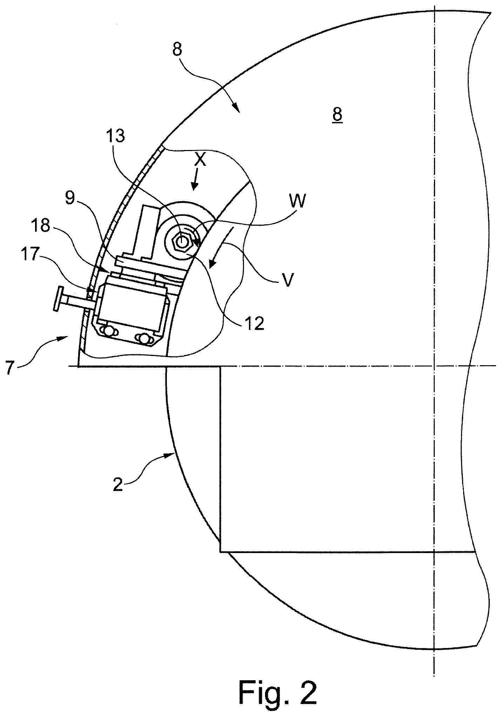

Von besonderer Bedeutung für die Erfindung ist nun eine Sägeblattschleifvorrichtung 7, die sich an das Sägeblatt 2 stirnseitig anstellen lässt. Die Sägeblattschleifvorrichtung 7 ist vorliegend an einer Abdeckhaube 8 für das Sägeblatt 2 lösbar befestigt. Zu diesem Zweck ist die Abdeckhaube 8 mit einer in der Fig. 1 angedeuteten und gegebenenfalls verschließbaren Öffnung ausgerüstet. Im Rahmen des Beispiels nach der Fig. 2 findet sich die Sägeblattschleifvorrichtung 7 im Innern der Abdeckhaube 8.

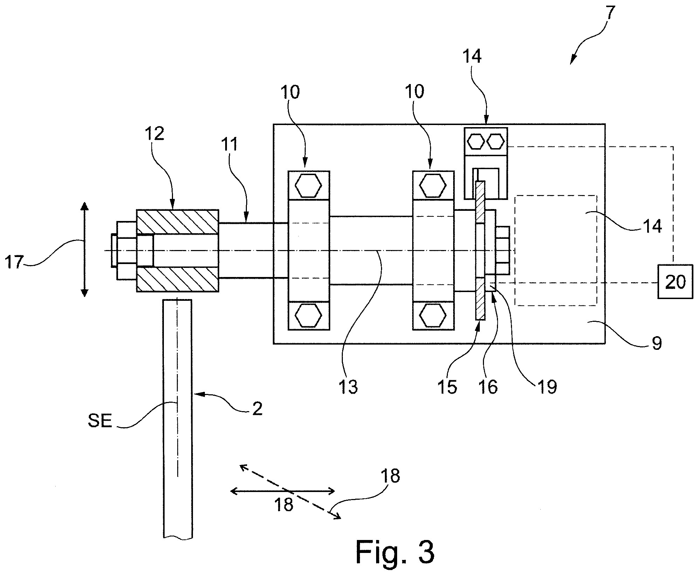

In der Detailansicht nach der Fig. 2 auf die erfindungsgemäße Sägeblattschleifvorrichtung 7 ist ein Ansichtspfeil X angegeben, welcher zu der Fig. 3 korrespondiert. Das heißt, die Fig. 3 zeigt einen Blick entlang des Pfeils X auf den Gegenstand nach der Fig. 2. Folgerichtig erkennt man anhand der Fig. 2 und 3, dass die Sägeblattschleifvorrichtung 7 insgesamt auf einer Grundplatte 9 angeordnet ist. Auf dieser Grundplatte 9 sind Lagerböcke 10 montiert, die zur Lagerung einer Welle 11 dienen. Die Welle 11 kann folglich gegenüber den Lagerböcken 10 um eine Achse 13 rotieren. An einem Ende der Welle 11 ist ein Schleifelement 12 vorgesehen.

Bei dem Schleifelement 12 handelt es sich im Rahmen der Fig. 2 um einen Zylinderschleifstift 12. Grundsätzlich kann das Schleifelement 12 aber auch als Rundschleifscheibe, Planschleifscheibe oder auch als Topfschleifscheibe ausgebildet sein. Anhand der Darstellung in Fig. 2 erkennt man, dass das Sägeblatt 2 mit einer Umfangsgeschwindigkeit V rotiert. Mit dieser Umfangsgeschwindigkeit V beschreibt das Sägeblatt 2 die Schnittebene SE in Verbindung mit dem Hub H. Im Ausführungsbeispiel fallen die Schnittebene SE und die Zeichenblattebene der Fig. 1 zusammen. Außerdem sei die Schnittebene SE größtenteils identisch mit der vom Sägeblatt 2 aufgespannten Sägeblattebene.

Sobald das Schleifelement 12 an das Sägeblatt 2 angelegt wird, werden die Rotationen des Sägeblattes 2 auf das Schleifelement 12 übertragen. Als Folge hiervon dreht sich das Schleifelement 12 um die Achse 13 mit einer eigenen Vorschubgeschwindigkeit W, wie sie in der Fig. 2 für das Schleifelement 12 eingetragen ist. Das Schleifelement 12 ist insgesamt antriebslos ausgebildet, wenngleich ein in der Fig. 3 gestrichelt angedeuteter Antrieb 14 möglich ist und von der Erfindung umfasst wird.

Sobald also das Schleifelement 12 in Kontakt mit dem rotierenden Sägeblatt 2 kommt, sorgt die Umfangsgeschwindigkeit V des Sägeblattes 2 dafür, dass auch das Schleifelement 12 in Rotationen mit der eigenen Umfangsgeschwindigkeit W versetzt wird. Man erkennt anhand der Fig. 2, dass im Anlagebereich bzw. Berührbereich beide Vorschubgeschwindigkeiten V, W gleichgerichtet sind. Damit die Umfangsgeschwindigkeit W des Schleifelementes 12 in einem zulässigen Bereich von in etwa 30 m/s bis 60 m/s gehalten wird, ist die Sägeblattschleifvorrichtung 7 erfindungsgemäß mit wenigstens einer Bremseinheit 14, 15 ausgerüstet. Die Bremseinheit 14, 15 ist vorliegend als Reibbremse und insbesondere Scheibenbremse 14, 15 mit einer Bremsscheibe 15 und einer die Bremsscheibe 15 umschließenden Bremszange 14 ausgerüstet. Die Bremsscheibe 15 ist auf der Welle 13 endseitig montiert. Hierzu ist eine Sicherungsscheibe 16 vorgesehen. Am anderen Ende der Welle 13 findet sich das Schleifelement 12.

Anhand einer vergleichenden Betrachtung der Fig. 2 und 3 erkennt man darüber hinaus, dass das Schleifelement 12 mit einer Verstelleinheit 17, 18 an das Sägeblatt 2 angelegt und/oder gegenüber dem Sägeblatt 2 ausgerichtet wird. Die Verstelleinheit 17, 18 setzt sich im Ausführungsbeispiel aus zwei Stellschlitten 17, 18 zusammen und mag an die Grundplatte 9 angeschlossen sein. Dabei fungiert der Stellschlitten 17 derart, dass er für einen Radialvorschub des Schleifelementes 12 im Vergleich zum Sägeblatt 2 in der zugehörigen Schnittebene SE sorgt. Der andere Stellschlitten 18 fungiert demgegenüber als Querschlitten im Vergleich zu der fraglichen Schnittebene SE bzw. der Sägeblattebene. Das heißt, mit Hilfe des weiteren Stellschlittens 18 kann das Schleifelement 12 quer zum Sägeblatt 2 bzw. der Schnittebene SE oder auch schräg hierzu ausgerichtet werden, wie dies strichpunktiert und durchgezogen in der Fig. 3 angedeutet ist.

Die Umfangsgeschwindigkeit W des Schleifelementes 12 lässt sich mit Hilfe der Bremseinheit 15, 16 variierbar einstellen. Zu diesem Zweck ist dem Schleifelement 12 ein Drehzahlsensor 19 zugeordnet, der im Ausführungsbeispiel nach der Fig. 3 eine Platzierung am Ende der Welle 11, benachbart zur Sicherungsscheibe 16 oder in diese integriert erfährt. Der Drehzahlsensor 19 gibt seine Werte an eine Steuereinheit 20 weiter. Mit Hilfe der Steuereinheit 20 kann nun die Bremseinheit 14, 15 entsprechend beaufschlagt werden, damit die Umfangsgeschwindigkeit W des Schleifelementes 12 im zulässigen Rahmen gehalten wird. Dazu arbeitet die Steuereinheit 20 auf die Bremszange 14 und legt dies im Beispielfall an die Bremsscheibe 15 an bzw. lüftet die Bremszange 14 im Vergleich zur Bremsscheibe 15, um die gewünschte Umfangsgeschwindigkeit W des Schleifelementes 12 realisieren zu können.

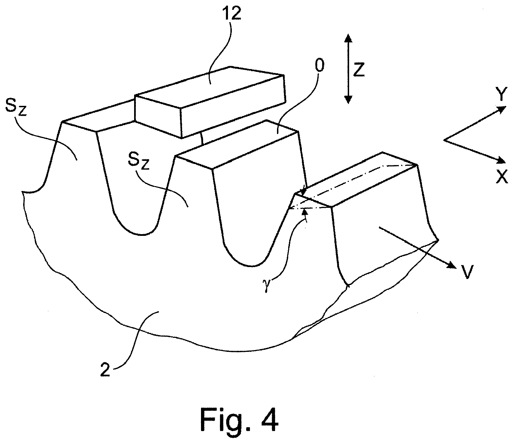

Die Sägeblattschleifvorrichtung 7 kann den schematisch in der Fig. 4 dargestellten Sägezahn SZ mit Hilfe des angedeuteten Schleifelementes 12 so bearbeiten, dass der jeweilige Sägezahn SZ mit einer mehr oder minder horizontalen Obenfläche bzw. Oberfläche O ausgerüstet wird. Auf diese Weise erhält der Sägezahn SZ einen größtenteils trapezförmigen Querschnitt. Außerdem erreicht die Erfindung hierdurch, dass die in der angedeuteten Drehrichtung bzw. der entsprechend gerichteten Vorschubgeschwindigkeit V vordere Kante des Sägezahns SZ geschärft wird. Dabei wird meistens mit sehr kleinen Freiwinkeln γ gearbeitet oder sogar gänzlich ohne einen solchen Freiwinkel γ. Bei dem Freiwinkel γ handelt es sich um den Neigungswinkel der Oberfläche bzw. Obenfläche O gegenüber der Horizontalen in der mit Hilfe der Vorschubgeschwindigkeit V angedeuteten Drehrichtung des Sägeblattes 2. In der Fig. 4 ist noch weiter dargestellt, dass sich das Schleifelement 12 in prinzipiell sämtlichen drei Raumrichtungen x, y, z mit Hilfe der Stelleinheit 17, 18 verfahren lässt.

Wie einleitend bereits erläutert, kann die Sägeblattschleifvorrichtung 7 während Walzpausen für die Bearbeitung der Sägezähne SZ sorgen. Dazu mag zusätzlich die Verstelleinheit 17, 18 an die Steuereinheit 20 angeschlossen werden. Sobald die Steuereinheit 20 in diesem Fall eine Nachricht über eine Walzpause oder eine sonstige Unterbrechung des Herstellungsvorganges der zu schneidenden Werkstücke 1 erhält, sorgt im Anschluss daran die Steuereinheit 20 dafür, dass mit Hilfe der Verstelleinheit 17, 18 das Schleifelement 12 an das zu bearbeitende Sägeblatt 2 angestellt wird.

## Patentansprüche

1. Sägemaschine zum Schneiden oder Trennen von Werkstücken (1), insbesondere Schlittensäge zum Sägen von Walzprodukten wie Profilstäben (1) oder Rundstäben ausgangsseitig einer Walzstraße, mit zumindest einem rotierenden Sägeblatt (2) mit Sägezähnen (SZ), ferner mit einer Transporteinrichtung (3) für die Zuführung der Werkstücke (1) zur Sägemaschine, weiter mit einem Antrieb (4) für einen Sägeschlitten (5) zum Vorfahren der Sägemaschine unter Schneiden oder Trennen des Werkstückes (1) in vorwählbarer Schnittebene (SE) um ein vorgegebenes Vorschubmaß (H) und zum Zurückfahren der Sägemaschine nach erfolgtem Schneid- oder Trennvorgang, und mit einer an das Sägeblatt (2) wenigstens stirnseitig anstellbaren Sägeblattschleifvorrichtung (7) zum zumindest umfangsseitigen Bearbeiten der Sägezähne (SZ),
**dadurch gekennzeichnet, dass**
die Sägeblattschleifvorrichtung (7) wenigstens eine Bremseinheit (14, 15) aufweist.

2. Sägemaschine nach Anspruch 1, **dadurch gekennzeichnet, dass** die Sägeblattschleifvorrichtung (7) antriebslos in Bezug auf ein Schleifelement (12) ausgebildet ist.

3. Sägemaschine nach Anspruch 2, **dadurch gekennzeichnet, dass** das Schleifelement (12) als Rundschleifscheibe, Planschleifscheibe, Zylinderschleifstift (12) oder Topfschleifscheibe ausgebildet ist.

4. Sägemaschine nach Anspruch 2 oder 3, **dadurch gekennzeichnet, dass** das Schleifelement (12) mit Hilfe einer Verstelleinheit (17, 18) an das Sägeblatt (2) angelegt und/oder gegenüber dem Sägeblatt (2) ausgerichtet wird.

5. Sägemaschine nach Anspruch 4, **dadurch gekennzeichnet, dass** die Verstelleinheit (17, 18) mit zwei Stellschlitten (17, 18) ausgerüstet ist.

6. Sägemaschine nach Anspruch 5, **dadurch gekennzeichnet, dass** ein Stellschlitten (17) für einen Radialvorschub in der Schnittebene (SE) und der andere Stellschlitten (18) für eine Querbewegung im Vergleich zur Schnittebene (SE) sorgt.

7. Sägemaschine nach einem der Ansprüche 2 bis 6, **dadurch gekennzeichnet, dass** das Schleifelement (12) in an das rotierende Sägeblatt (2) angelegtem Zustand selbst in Rotationen versetzt wird.

8. Sägemaschine nach Anspruch 7, **dadurch gekennzeichnet, dass** eine Umfangsgeschwindigkeit (W) des Schleifelementes (12) mit Hilfe der Bremseinheit (14, 15) variierbar eingestellt wird.

9. Sägemaschine nach einem der Ansprüche 2 bis 8, **dadurch gekennzeichnet, dass** dem Schleifelement (12) ein Drehzahlsensor (19) zugeordnet ist, dessen Werte von einer Steuereinheit (20) zur Beaufschlagung der Bremseinheit (14, 15) ausgewertet werden.

10. Sägemaschine nach einem der Ansprüche 2 bis 9, **dadurch gekennzeichnet, dass** die Bremseinheit (14, 15) an eine das Schleifelement (12) tragende Welle (11) angeschlossen ist.

11. Sägemaschine nach Anspruch 10, **dadurch gekennzeichnet, dass** die Bremseinheit (14, 15) und das Schleifelement (12) im Wesentlichen an sich gegenüberliegenden Enden der Welle (11) vorgesehen sind.

12. Sägemaschine nach einem der Ansprüche 1 bis 11, **dadurch gekennzeichnet, dass** die Bremseinheit (14, 15) als Reibbremse, insbesondere Scheibenbremse (14, 15), Fluidbremse, Wirbelstrombremse oder Kombinationen hiervon ausgebildet ist.

13. Sägemaschine nach einem der Ansprüche 1 bis 12, **dadurch gekennzeichnet, dass** die Bearbeitung der Sägezähne (SZ) mittels der Sägeblattschleifvorrichtung (7) während Walzpausen, gegebenenfalls mehrfach, durchführbar ist.

## Claims

1. A sawing machine for cutting or separating workpieces (1), in particular a sliding saw for sawing rolled products, such as profiled bars (1) or round bars on the output side of a rolling train, comprising at least one rotating saw blade (2) with saw teeth (SZ), further comprising a transporting device (3) for feeding the workpieces (1) to the sawing machine, further comprising a drive (4) for a sawing slide (5) for advancing the sawing machine while cutting or separating the workpiece (1) in a preselectable cutting plane (SE) by a predetermined advancing increment (H) and for returning the sawing machine after the cutting or separating operation has been performed, and comprising a saw-blade grinding device (7) which can be places at least with the end face against the saw blade (2) for at least circumferentially machining the saw teeth (SZ),
**characterized in that**
the saw-blade grinding device (7) has at least one braking unit (14, 15).

2. The sawing machine according to claim 1, **characterized in that** the saw-blade grinding device (7) is formed to be driveless with respect to a grinding element (12).

3. The sawing machine according to claim 2, **characterized in that** the grinding element (12) is formed as a circular grinding wheel, a planar grinding wheel, a cylindrical grinding pencil (12) or a cup wheel.

4. The sawing machine according to claim 2 or 3, **characterized in that** the grinding element (12) is placed against the sawing blade (2) and/or aligned with respect to the sawing blade (2) by means of an adjusting unit (17, 18).

5. The sawing machine according to claim 4, **characterized in that** the adjusting unit (17, 18) is provided with two positioning slides (17, 18).

6. The sawing machine according to claim 5, **characterized in that** one positioning slide (17) provides for a radial feed in the cutting plane (SE) and the other positioning slide (18) provides for a transverse movement relative to the cutting plane (SE).

7. The sawing machine according to any one of claims 2 to 6, **characterized in that** the grinding element (12) itself is rotated in a state when it is placed against the rotating saw blade (2).

8. The sawing machine according to claim 7, **characterized in that** a circumferential speed (W) of the grinding element (12) is variably set by means of the braking unit (14, 15).

9. The sawing machine according to any one of claims 2 to 8, **characterized in that** the grinding element (12) is assigned a rotational speed sensor (19), the values of which are evaluated by a control unit for acting on the braking unit (14, 15).

10. The sawing machine according to any one of claims 2 to 9, **characterized in that** the braking unit (14, 15) is connected to a shaft (11) carrying the grinding element (12).

11. The sawing machine according to claim 10, **characterized in that** the braking unit (14, 15) and the grinding element (12) are provided substantially on opposite ends of the shaft (11).

12. The sawing machine according to any one of claims 1 to 11, **characterized in that** the braking unit (14, 15) is formed as a friction brake, in particular a disk brake (14, 15), fluid brake, eddy-current brake or combinations thereof.

13. The sawing machine according to any one of claims 1 to 12, **characterized in that** machining the saw teeth (SZ) can be carried out during rolling pauses, optionally multiple times, by means of the saw-blade grinding device (7).

## Revendications

1. Machine à scier pour découper ou tronçonner des pièces (1), notamment scie à chariot pour scier des produits laminés comme des barres profilées (1) ou des barres rondes sortant d'un train de laminoir, avec au moins une lame de scie (2) rotative avec des dents de scie (SZ), avec en plus un dispositif de transport (3) pour l'acheminement des pièces (1) vers la machine à scier, avec en outre un système d'entraînement (4) pour un chariot de scie (5) pour faire avancer la machine à scier en découpe ou en tronçonnage de la pièce (1) dans un plan de coupe (SE) présélectionnable d'une cote d'avance (H) prédéfinie et pour faire reculer la machine à scier après une opération de coupe et de tronçonnage réussie et avec un dispositif d'affûtage de lame de scie (7) pouvant être au moins réglé de face pour au moins l'usinage périphérique des dents de scie (SZ), **caractérisée en ce que**
le dispositif d'affûtage de lame de scie (7) comporte au moins une unité de freinage (14,15).

2. Machine à scier selon la revendication 1, **caractérisée en ce que** le dispositif d'affûtage de lame de scie (7) est constitué sans entraînement eu égard à un élément d'affûtage (12).

3. Machine à scier selon la revendication 2, **caractérisée en ce que** l'élément d'affûtage est constitué en tant que meule de rectification cylindrique, meule de rectification plane, meule sur tige cylindrique (12) ou meule-boisseau.

4. Machine à scier selon la revendication 2 ou 3, **caractérisée en ce que** l'élément d'affûtage (12) est appliqué à la lame de scie (2) et/ou orienté par rapport à la lame de scie (2) à l'aide d'une unité de réglage (17,18).

5. Machine à scier selon la revendication 4, **caractérisée en ce que** l'unité de réglage (17,18) est équipée de deux chariots de réglage (17,18).

6. Machine à scier selon la revendication 5, **caractérisée en ce qu'**un chariot de réglage (17) assure une avance radiale dans le plan de coupe (SE) et l'autre chariot de réglage (18) un mouvement transversal par comparaison au plan de coupe (SE).

7. Machine à scier selon l'une quelconque des revendications 2 à 6, **caractérisée en ce que** l'élément d'affûtage (12) est décalé même dans les rotations à l'état appliqué à la lame de scie (2) en rotation.

8. Machine à scier selon la revendication 7, **caractérisée en ce qu'**une vitesse périphérique (W) de l'élément d'affûtage (12) est réglée pouvant être modifiée à l'aide de l'unité de freinage (14,15).

9. Machine à scier selon l'une quelconque des revendications 2 à 8, **caractérisée en ce qu'**un capteur de nombre de tours (19) est attribué à l'élément d'affûtage (12), dont les valeurs sont exploitées par une unité de commande (20) pour application à l'unité de freinage (14,15).

10. Machine à scier selon l'une quelconque des revendications 2 à 9, **caractérisée en ce que** l'unité de freinage (14,15) est raccordée à un arbre (11) portant l'élément d'affûtage (12).

11. Machine à scier selon la revendication 10, **caractérisée en ce que** l'unité de freinage (14,15) et l'élément d'affûtage (12) sont prévus pour l'essentiel aux extrémités s'opposant de l'arbre (11).

12. Machine à scier selon l'une quelconque des revendications 1 à 11, **caractérisée en ce que** l'unité de freinage (14,15) est constituée en tant que frein à friction, notamment frein à disques (14,15), frein hydraulique, frein à courant de Foucault ou des combinaisons de ceux-ci.

13. Machine à scier selon l'une quelconque des revendications 1 à 12, **caractérisée en ce que** l'usinage des dents de scie (SZ) peut être exécuté pendant les pauses de laminage au moyen du dispositif d'affûtage de lame de scie (7), le cas échéant plusieurs fois.
